# EUROPEAN PATENT SPECIFICATION

(11) **EP 2 689 213 B1**
(45) Date of publication and mention of the grant of the patent: **14.10.2015**
(21) Application number: 11776124.7
(22) Date of filing: 27.10.2011
(51) Int. Cl.: G01C 21/32, G06F 17/30, G01C 21/36

(54) **MANAGEMENT OF ICONS FOR DIGITAL MAPS**
VERWALTUNG VON SYMBOLEN FÜR DIGITALE KARTEN
GESTION D'ICÔNES POUR CARTES NUMÉRIQUES

(30) Priority: 22.03.2011 EP 11002357
(43) Date of publication of application: 29.01.2014
(73) Proprietor: Harman Becker Automotive Systems GmbH, 76307 Karlsbad (DE)
(72) Inventor: SPINDLER, CC, 76135 Karlsruhe (DE); IVANOV, Vladimir, 81375 München (DE); FISCHER, Martin, 80805 München (DE); SCHÜTZ, Simon, 70195 Stuttgart (DE)
(74) Representative: Grünecker Patent- und Rechtsanwälte PartG mbB
(86) International application number: PCT/EP2011/005437
(87) International publication number: WO 2012/126492

(56) References cited:
- JP-A- 10 089 990
- US-A- 5 734 873
- US-A1- 2002 065 605
- US-A1- 2008 021 644
- Anonymous: "iGO 8 User Manual -Navigation software for mobile devices", iGO My Way , December 2008 (2008-12), pages 1-92, XP002659786, Retrieved from the Internet: URL:http://marketing.igomyway.com/USER_MAN UALS/iGO_8/iGO8_R3_PDA_UserManual_English_ UK.pdf [retrieved on 2011-09-22] & Anonymous: "How to install POI Icons ig08", Austech , February 2010 (2010-02), XP002659832, Retrieved from the Internet: URL:http://www.austech.info/gps/33027-how- install-poi-icons-ig08.html [retrieved on 2011-09-22] & Anonymous: "Thread: How do you add/merge bmp poi files?", Naviextras , August 2008 (2008-08), XP002659833, Retrieved from the Internet: URL:https://www.naviextras.com/shop/mvnfor um/viewthread?thread=1746 [retrieved on 2011-09-22]

## Description

### Field of Invention

The present invention relates to digital maps representing towns and landscapes that can be used for route guidance by a navigation system and, in particular, it relates to the management and display of icons in digital maps.

### Prior Art

The use of navigation systems, in particular, in vehicles as automobiles becomes increasingly prevalent. Usually on board navigation computer systems analyze the combined data provided by GPS (Global Positioning System), motion sensors as ABS wheel sensors as well as a digital map and thereby determine the actual position and velocity of a vehicle with increasing preciseness.

Known navigation systems typically make use electronic digital maps to represent cartographic features, as streets, buildings and rivers, and make use of a medium such as a compact disk or a digital video disc to store the data that relates to the cartographic features. After map matching the actual position of the user is indicated in the digital map. By acoustic and/or visualized information the user is guided to the predetermined destination.

Some navigation systems are able to display detailed digital maps indicating routes to destinations, the types of manoeuvres to be taken at various locations as junctions as well as different kinds of points of interest as, for example, gas stations or restaurants and also landmarks. As the vehicle changes position, either the vehicle position mark on the displayed image changes, or the digital map is scrolled, while the vehicle position mark is fixed at a predetermined position.

More elaborated navigation systems provide enlarged views, for example, of junctions on the guide route, where the driver should turn, in order to help the driver to identify the route to be taken to the predetermined destination more accurately. The displayed images represent simplified synthesized views from the driver's perspective. However, a 2-dimensional representation can confuse the driver, in particular, if roads are intersecting a different height levels or in rotary turns with roads in close proximity. Herein, the terms 'road' and 'street' are used in an interchangeable manner.

Recently, various navigation systems have been developed that have provided algorithms for transforming data from a geographic database into a 3-dimensional perspective view which, in principle, is much more easily understood by many drivers. Elaborated systems allow for displaying the intersection approached by the vehicle at variable angles relative to the road depending on the complexity of the intersection. Herein, the terms 'intersection' and 'junction' are used in an interchangeable way.

In order to provide the navigation functions the navigation systems make use of one or more detailed databases that comprise data which represent physical features of a geographic region. The employed navigation database may comprise a main image file comprising bitmap images consisting, e.g., of bitmap of the road geometry signposts, landmarks, the skyline etc. The database may comprise a main image file comprising bitmap images and/or vector graphics consisting, e.g., of bitmap of the road geometry, signposts, landmarks, the skyline etc.

Characteristic elements of digital maps used for navigation purposes are icons. Icons are symbols providing information about the traffic situation, points of interest, route guidance, traffic signs, etc. Icons can be part of signposts that comprise relatively big signs displaying *inter alia* the direction to a city, signpost icons in form of a graphic representation of facilities as an industrial area, a soccer stadium, an airport, etc., road number icons indicating the number of a road, a highway, etc., an exit number icon indicating the road number of a road branching at an intersection (junction).

However, retrieval of icons stored in a navigation database is time consuming. In particular, in the context of embedded systems as vehicle navigation systems with limited computational resources it is desirable to shorten the access time needed to load and display icons in a digital map. Thus, it is a problem underlying the present invention to provide a means for fast retrieval of icons from a database for displaying the same in a digital map.

### Description of the Invention

The present invention addresses the above-mentioned problem and provides a method for the management of icons in a navigation database comprising storing data for a plurality of icons in one single data array representing an image containing the plurality of icons. Each icon is given by data of the icon. Herein, by the term icon, in principal, any two- or three-dimensional symbol is comprised. Depending on the application an icon is a two-dimensional symbol (graphics). According to the invention and contrary to the prior art the data of a number of icons is stored in the graphic memory in one data array. The data array represents an image, for example, in the PNG format, wherein each of these icons has a defined location. For example, the data array represents an image with a number n₁ of icons in the first row, a number n₂ of icons in the second row and so on to a number of icons nₘ in the m-th and last row of the image. Herein, n₁ to nₘ may be the same integer number.

In fact, according to an embodiment one single big PNG image is calculated from individual PNG images representing icons. In addition, to the big PNG image entries representing references to the positions of the individual PNG images comprised in the big PNG image are stored.

Consequently, the icons have not to be read out separately when they are needed for the display in a digital map used for navigation purposes. Rather, all icons of the data array can be read into a memory once and held for subsequent usage in the digital map. In particular, the method, thus, comprises loading the single data array in a graphic memory (video memory) of a navigation system. Once loaded into the memory each of the plurality icons of the data array can quickly be retrieved from the memory for display in a digital map. There is no delay caused by individual loading of icons, as it disadvantageously occurs in the art.

According to an embodiment the data array is a table comprising information on the widths, heights, and coordinates (x- and y-coordinate values) of the icons in the image represented by the data array and comprising the icons at particular positions. Each of the plurality of icons given in the table stored in the memory of the navigation system can be retrieved for displaying the same in a digital map by referring to the coordinates of the icon in the image. Moreover, it may be referred to the height and width of the icon as well to receive further information valuable for deciding on the actual position of the icon in the digital map. Appropriate positioning of icons in a digital map is of importance with respect to the readability of the icons, in particular, in the context of three-dimensional digital maps used for navigation purposes.

The method may further comprise storing another plurality of icons in another single data array. The first mentioned and the another plurality of icons may differ from each other such that, whenever an icon of the first mentioned plurality of icons is needed for display in the digital map, no icon of the other plurality of icons will (very probably) be needed for concurrent display. Thus, preferably only one of the pluralities of icons is loaded in the memory while the other one is stored in the navigation database and will be loaded at another time in the memory of the navigation system.

For example, the navigation system may provide an off-road navigation mode and a particular plurality of icons are loaded in the memory only if the off-road mode is selected by a user, whereas that plurality of icons will never be loaded in the usual on-road mode. According to another example, the first mentioned plurality of icons may consist of icons needed during navigation in day-time only whereas the other plurality of icons may consist of icons needed during navigation in night-time only or vice versa. Consequently, only icons stored in a single data array (for example, a table as described above) that are used in the actual navigation process are loaded in the memory for fast retrieval.

One or more icons can be displayed as part of a signpost. Signposts are signs that in the physical environment, for example, are positioned at highway intersections (in particular, intersections of German *Bundesstraßen* and *Autobahnen*) and indicate the direction to a city, facilities as an industrial area, a soccer stadium, an airport, etc., the number of a road, a highway, etc., and/or the road number of a road branching at an intersection (junction).

A signpost is displayed in a digital map in form of a background of the signpost and some signpost text. The signpost may additionally comprise at least one signpost icon. A signpost icon may indicate / represent symbolically an industrial area, a soccer stadium, an airport, etc. In the context of the display of a signpost the inventive method may also comprise storing a background of a signpost separately of the plurality of icons. The separately stored (data of a) background can be retrieved from the navigation database when a signpost with that background has to be displayed and icons to be displayed in the signpost can be retrieved from the graphic memory wherein the plurality of icons have been loaded.

The method may further comprise storing a reference between icons of the plurality of icons and the background of the signpost in the navigation database. The reference represents a (data) link between the icon and the background of the signpost. This reference allows for composing the signpost for displaying the same without the need for determining the appropriate background of the signpost for a particular signpost by online calculation. According to this example the suitable background of the signpost is linked to the icon beforehand thereby avoiding the risk of a false assignment during online calculation.

It is also provided a method for route guidance implemented in a navigation system, in particular, a vehicle navigation system, with a display device comprising the steps of the method according to one of the above-described examples and providing guidance information to a user of the navigation system.

Furthermore, it is provided a computer program product, comprising one or more computer readable media having computer-executable instructions for performing the steps of the method according to one of the above-described examples.

The above-mentioned problem is also addressed by a navigation database comprising digital map data and one or more data arrays each comprising data of a plurality of icons. In the navigation database each data array may comprise a plurality of icons is a table comprising information on the width, height, and coordinates of the icons in the image.

Furthermore, it is provided a navigation system, in particular, a vehicle navigation system, comprising one of the above examples and a display means configured to display a digital map including at least one icon of the plurality of icons.

The present invention provides a method according to claim 1.

In this example, the plurality of the icons may be stored in the single data array in form of a table comprising information on the width, height, and coordinates of the icons in the image and the at least one icon that is displayed on the display device, in this case, can be retrieved from the table by referring to the coordinates of the at least one icon in the table.

The accurate positioning of the icon displayed in the digital map is also an issue. In this respect, the method may further comprise
determining a portion a portion in the vicinity of a map element (a graphical element of the map representing some physical object) in the digital map where no overlap with the icon shall occur; and
positioning the icon such that the portion in the vicinity of the map element in the digital map where no overlap with the icon shall occur is not covered by the icon.

Furthermore, it is provided a navigation system, in particular, a vehicle navigation system, according to claim 12.

In all of the above-described embodiments the involved digital map can be a two-dimensional or three-dimensional digital map, particularly, comprising three-dimensional junction views.

Additional features and advantages of the present invention will be described in the following. In the description, reference is made to the accompanying figure that is meant to illustrate preferred embodiments of the invention. It is understood that such embodiments do not represent the full scope of the invention.

Consider the case wherein a destination is input in a navigation system by a user. The navigation system determines the current position of the vehicle wherein the navigation system is installed and calculates a route to the destination. The navigation system may be a vehicle navigation system that particularly comprises a GPS (Global Positioning System) and motion sensors as ABS wheel sensors for localization of the vehicle and map matching. The navigation system determines icons to be displayed on a display device of the navigation system during the travel to the destination.

The icons to be displayed can be any symbols, for example, providing information about the traffic situation, points of interest (Hotels, Police offices, gas stations, etc.), route guidance, traffic signs, etc. The icons can also be part of signposts that comprise relatively big signs displaying *inter alia* the direction to a city, signpost icons in form of a graphic representation of facilities as an industrial area, a soccer stadium, an airport, etc., road number icons indicating the number of a road, a highway, etc., an exit number icon indicating the road number of a road branching at an intersection (junction).

Based on the determined icons a single data array representing an image containing the plurality of icons is retrieved from a database, i.e. loaded into the memory of a processor of the navigation system. The single data array is loaded into a graphic memory. The single data array contains all icons to be displayed in the digital map shown to the user during the travel to the destination. Consequently, the icons have not to be read out separately when they are needed for the display in a digital map. Once loaded into the memory each of the plurality icons of the data array can quickly be retrieved from the memory for display in a digital map. Particularly, there is no delay caused by individual loading of icons, as it disadvantageously occurs in the art.

In fact, during route guidance a map section showing a part of the route to the destination input by the user is shown. When the navigation system determines that one or more icons have to be displayed in an actual map section the respective icons are retrieved from the memory and they are displayed in the digital map (section) displayed on the display device of the navigation system. According to this example, the single data array can be an image data file, for instance, a PNG file or any other formatted file as considered suitable, and the icons can be arranged in the PNG file in form of a table comprising information on the widths, heights, and coordinates (x- and y-coordinate values) of the icons in the image. Retrieving particular entries of such a table can readily be performed by methods known in the art. Whereas a table is considered as suitable data structure any kind of structured data that allows for the individual retrieval of data entries (in form of the icons) is, in principle, compatible with the present invention.

The PNG (The Portable Network Graphics) format was designed to replace the older and simpler GIF format and, to some extent, the much more complex TIFF format. Besides PNG, GIF and TIFF formats may nevertheless be used in embodiment of the present invention. For image editing PNG provides a useful format for the storage of intermediate stages of editing. Compression in the PNG format is fully lossless. PNG supports up to 48-bit true color or 16-bit grayscale and, thus saving, restoring and re-saving an image will not degrade its quality, unlike, for example, the JPEG format. Like GIF and TIFF, PNG is a *raster* format and represents an image as a two-dimensional array of colored dots or pixels.

PNG supports three main image types: true color, grayscale and palette-based. PNG supports three main types of integrity-checking to help avoid problems with file transfers and the like. The first and simplest is the eight-byte magic signature at the beginning of every PNG image. The second type of integrity-checking is known as a 32-bit cyclic redundancy check. The third type of integrity check applies only to the image-data chunks and is similar to the cyclic redundancy check, in principle.

The icons comprised in a PNG image file may be two-dimensional or three-dimensional icons. For example, the icons can be vector graphics. Based on recorded images of buildings, or the like, 3-dimensional models can be synthesized as vector graphics. Preferably, such synthesized models have data formats and algorithms that are adapted to the limited computer resources of vehicle navigation systems. Since vector graphics are based on mathematical functions, they can be calculated from relatively few data points that have to be stored. Data of each vector graphic has to be stored in a vector database only once. Nevertheless, even if vector graphics rather than conventional bitmaps are used, still the demand for computational resources is relatively high.

It should be noted that besides managing the storing of the icons the positioning of the displayed icon is also an important issue. Thus, it might be desirable to determine a portion of a map element where an icon shall be displayed where no overlap with the icon shall occur or to determine a portion in the vicinity of the map element in the digital map where no overlap with the icon shall occur. Then, the icon is positioned in the digital map such that the portion of the map element where no overlap with the icon shall occur and/or the portion in the vicinity of the map element in the digital map where no overlap with the icon shall occur is not at all covered by the icon.

A map element, in this context, is a graphical element of the map representing some physical object, for example, a building, a road, a mountain, a river, a lake, etc. Since according to this example, it is determined a portion of the map element where no overlap with the icon shall occur and/or a portion in the vicinity of the map element in the digital map where no overlap with the icon shall occur, it can be reliably avoided that an icon partly overlaps and thereby hides a portion of the map element. Thus, for example, a junction in two-dimensional or three-dimensional view can be displayed in a manner that allows that all relevant parts can be completely seen by a user.

The portion of the map element where no overlap with the icon shall occur and/or the portion in the vicinity of the map element in the digital map where no overlap with the icon shall occur can be determined based on coordinates provided for the digital map. Thereby, exact positioning of the icon is made possible. Thus, it is possible to determine coordinate values of a point of the map element and the portion of the map element where no overlap with the icon shall occur and/or the portion in the vicinity of the map element in the digital map where no overlap with the icon shall occur can be determined based on the determined coordinate values. The coordinate values can be stored in an database of the navigation system.

According to an example, the portion of the map element in the digital map where no overlap with the icon shall occur and/or the portion in the vicinity of the map element where no overlap with the icon shall occur can, particularly, be determined by a radius defined about the coordinates with the determined coordinate values. For example, it may be determined a radius about coordinate of a central point of the map element. Information on the coordinate values of such coordinates is also stored in the database of the navigation system.

The digital map used in the present invention may include entire street networks in a substantially two-dimensional representation. In such maps height information of streets is only given as information on the relative height of a particular street with respect to crossing street vectors in order to allow for a representation in the appropriate order with respect to the spatial depth. Alternatively, the digital map used in the present invention may be generated based on a terrain model, i.e. a three-dimensional model, e.g., a digital model obtained by laser-scanning.

A great variety of topographic terrain models is provided by official institutions as well as commercial providers. In principle, a digital terrain model is a digital file consisting of terrain elevations for ground positions at regularly or irregularly spaced horizontal intervals. Digital terrain products may be used in the generation of three-dimensional digital maps displaying terrain slope, the direction of slope and terrain profiles between selected points.

The invention may be implemented in a navigation system that is configured to display detailed three-dimensional junction views. For example, video data is obtained from a junction and stored to an offline-database. The database comprises a main image file comprising bitmap images for all lanes, sign post information, landmarks etc. The navigation system models the junction view on the basis of the afore-mentioned database by means of standard bitmap images, for instance. These bitmap images consist of a bitmap of the road geometry, for example, three lanes with an exit for one of these lanes, a bitmap of the recommended lane, optional bitmaps for signposts, landmarks, the skyline and the color of the sky. In this context, elements of the three-dimensional junction views can be stored in one single data array representing an image containing the plurality of icons as described above in detail.

In particular, the invention might be implemented in a navigation system that is configured to display detailed three-dimensional animated junction views. In this case, when a vehicle wherein the navigation system is installed approaches a junction, a representation of the respective junction is provided by a junction view database, for example, containing references to an the animation database storing animated data. The animated data consists of data units that may consist of bitmaps and/or vector graphics and/or metafiles, i.e. combined bitmaps and vector graphics.

The animation data consist of a temporal sequence of individual static images. The speed at which the animation takes place depends on the location and speed of the vehicle. The animation data show perspective views of the approached junction, i.e. number of lanes, slopes, branches and crossroads etc. Moreover, the animation data may comprise topographical objects as bridges and administrative buildings, and also signposts and environmental views of representing an urban, rural or industrial environment or a mountain landscape.

A junction view calculation unit of the navigation system addresses the animation database to obtain the actually relevant animated junction view data. Alternatively, the junction view calculation unit produces animated data from standard images provided by an animation database and/or a junction view database and/or a map database.

The animated data can be available in the Audio Video Interleave Format (AVI). In this case, the AVI data is provided to an AVI player of the navigation system. The animation starts and ends at well-defined positions ahead and behind of the junction. It is highly desirable that the AVI player is synchronized with data provided by a location system determining accurately the actual position of the vehicle. Thereby the elapsed time is synchronized with the driven distance, and it can be guaranteed that the synthesized animated junction view is displayed on the display device of the navigation system synchronously to the actual position of the vehicle. The icons refereed to in the present invention may represent any of such elements of an animated junction view.

The invention can be implemented for any kind of digital map, in principle. The digital map may be used in a navigation systems for pedestrians or a vehicle navigation system, for example, a navigation system installed in an aircraft, boat or automobile.

Moreover, it is envisaged that the data array (image) comprising the icons can be modified after the navigation system has been purchased by a user. For example, the image comprising the icons can be enlarged by additional icons. A user may download new icons, for instance, representing special points of interest, via the Internet or may buy a computer-readable medium, as a DVD, and load the new icons into the navigation system. If the icons are of a suitable format they can be incorporated into the data array (image). If the icons are ordered in the image into a table, new entries of the table can be generated for accommodating the supplementing icons.

In all of the above-described embodiments, it might be preferred to generate a plurality of data arrays each of which represents an image containing a plurality of icons. Each of the plurality of data arrays may comprise icon that are only to be displayed under particular circumstances. For example, one of the plurality of data arrays may contain only icons that shall be displayed in an off-road mode of the navigation system.

The user of the navigation system may select such an off-road mode and, in response to this selection, the particular one of the plurality of data arrays that contains the respective icons suitably to be displayed in the off-road mode is loaded into a memory of a central processing means of the navigation system. Other icons contained in other ones of the plurality of data arrays will not be considered at all. Thus, it is guaranteed that icons suitable for the off-road mode are readily be available for display. Since the entire image comprising the icons of the off-road is loaded in the memory of the central processing means any of the icons can be displayed without temporal delay whenever display of such an icon is needed.

For example, in the off-road mode there is no need for indicating traffic jams or traffic lights and, thus, the image comprising the icons of the off-road mode will not comprise icons indicating traffic jams or traffic lights. According to this example, it can be avoided that icons that will not be needed during route guidance will not be loaded in to the memory used by the display device for displaying icons in a digital map.

Similarly, according to a particular application an image containing icons suitable for navigation in a city area can be loaded into a memory when navigation in a city area is requested by a user of the navigation system. Such an image will comprise icons showing traffic lights and traffic jams, etc. Thus, classification of the icons into different kinds of data arrays may further facilitate the management of the icons to be displayed during route guidance.

## Claims

1. Method for the management of icons in a navigation database of a navigation system comprising:
receiving an input of a destination from a user;
calculating a route from a current position to the destination;
determining a plurality of icons to be displayed on a display device during a travel to the destination;
loading a single data array representing an image containing the plurality of icons to be displayed into a graphic memory of the navigation system; and
retrieving at least one icon of the plurality of icons to be displayed from the graphic memory for display on the display device.

2. The method according to claim 1, further comprising storing data for the plurality of icons in the single data array.

3. The method according to one of the preceding claims, wherein the single data array is a table comprising information on the width, height, and coordinates of the plurality of icons contained in the image.

4. The method according to one of the preceding claims, further comprising storing another plurality of icons in another single data array.

5. The method according to one of the preceding claims, further comprising storing a background of a signpost separately of the plurality of icons.

6. The method according to claim 5, further comprising storing a reference between at least one of the plurality of icons and the background.

7. Method for displaying icons in a digital map comprising the method according to claim 5 or 6 and comprising
retrieving the stored background of the signpost;
displaying the retrieved background in the digital maps; and
displaying the retrieved icon on the display background.

8. A method for route guidance implemented in a navigation system, in particular, a vehicle navigation system, with a display device comprising the steps of the method according to claim 7 and providing guidance information to a user of the navigation system.

9. Computer program product, comprising one or more computer readable media having computer-executable instructions for performing the steps of the method according to one of the preceding claims.

10. The method according to one of claims 1 to 8, wherein the plurality of the icons stored in the single data array in form of a table comprising information on the width, height, and coordinates of the icons in the image and wherein the at least one icon that is displayed on the display device is retrieved from the table by referring to the coordinates of the at least one icon in the table.

11. The method according to one of claims 1 to 8, further comprising
determining a portion in the vicinity of a map element in the digital map where no overlap with the icon shall occur; and
positioning the icon such that the portion in the vicinity of the map element in the digital map where no overlap with the icon shall occur is not covered by the icon.

12. A navigation system, in particular, a vehicle navigation system, comprising
a display means;
a central processing unit;
a database storing data for a plurality of the icons in one single data array representing an image containing the plurality of the icons;
wherein the central processing unit is configured:
to determine icons to be displayed on the display means during a travel from a current position of the vehicle to a destination;
to load the single data array containing all the icons to be displayed into a graphic memory based on the determined icons; and
to cause the display means to display a digital map and at least one icon of the plurality of icons in the single data array on the digital map.

## Patentansprüche

1. Verfahren zum Verwalten von Symbolen in einer Navigationsdatenbank eines Navigationssystems, umfassend
Empfangen einer Eingabe eines Zielorts von einem Benutzer;
Berechnen einer Route von einer aktuellen Position zu dem Zielort;
Bestimmen einer Mehrzahl von Symbolen zur Anzeige auf einer Anzeigevorrichtung während einer Fahrt zu dem Zielort;
Laden eines einzelnen Daten-Arrays, der ein Bild darstellt, das die Mehrzahl von anzuzeigenden Symbolen enthält, in einen Grafikspeicher des Navigationssystems; und
Abrufen von wenigstens einem Symbol der Mehrzahl von anzuzeigenden Symbolen aus dem Grafikspeicher zur Anzeige auf der Anzeigevorrichtung.

2. Verfahren nach Anspruch 1, ferner umfassend Speichern von Daten für die Mehrzahl von Symbolen in dem einzelnen Daten-Array.

3. Verfahren nach einem der vorangehenden Ansprüche, wobei das einzelne Daten-Array eine Tabelle ist, die Informationen zu Breite, Höhe und Koordinaten der Mehrzahl von Symbolen umfasst, die in dem Bild enthalten sind.

4. Verfahren nach einem der vorangehenden Ansprüche, ferner umfassend Speichern einer weiteren Mehrzahl von Symbolen in einem weiteren einzelnen Daten-Array.

5. Verfahren nach einem der vorangehenden Ansprüche, ferner umfassend Speichern eines Hintergrunds eines Verkehrsschilds separat von der Mehrzahl von Symbolen.

6. Verfahren nach einem der vorangehenden Ansprüche, ferner umfassend Speichern einer Referenz zwischen wenigstens einem von der Mehrzahl von Symbolen und dem Hintergrund.

7. Verfahren zum Anzeigen von Symbolen auf einer digitalen Karte, umfassend das Verfahren nach Anspruch 5 oder 6 und umfassend
Abrufen des gespeicherten Hintergrunds des Verkehrszeichens;
Anzeigen des abgerufenen Hintergrunds auf den digitalen Karten; und
Anzeigen des abgerufenen Symbols auf dem Anzeigehintergrund.

8. Verfahren zur Routenführung, das in einem Navigationssystem implementiert wird, insbesondere einem Fahrzeugnavigationssystem, mit einer Anzeigevorrichtung, umfassend die Schritte des Verfahrens nach Anspruch 7 und Bereitstellen von Führungsinformationen an einen Benutzer des Navigationssystems.

9. Computerprogrammprodukt, umfassend ein oder mehrere computerlesbare Medien mit computerausführbaren Anweisungen zum Durchführen der Schritte des Verfahrens nach einem der vorangehenden Ansprüche.

10. Verfahren nach einem der Ansprüche 1 bis 8, wobei die Mehrzahl von Symbolen, die in dem einzelnen Daten-Array in Form einer Tabelle gespeichert sind, Informationen zu Breite, Höhe und Koordinaten der Symbole in dem Bild umfassen, und wobei das wenigstens eine Symbol, das auf der Anzeigevorrichtung angezeigt wird, aus der Tabelle abgerufen wird, indem auf die Koordinaten des wenigstens einen Symbols n der Tabelle Bezug genommen wird.

11. Verfahren nach einem der Ansprüche 1 bis 8, ferner umfassend
Bestimmen eines Abschnitts in der Umgebung eines Kartenelements auf der digitalen Karte, wo keine Überlagerung mit dem Symbol stattfinden soll; und
Anordnen des Symbols derart, dass der Teil in der Umgebung des Kartenelements auf der digitalen Karte, wo keine Überlagerung mit dem Symbol stattfinden soll, nicht durch das Symbol bedeckt wird.

12. Navigationssystem, insbesondere Fahrzeugnavigationssystem, umfassend ein Anzeigemittel;
eine zentrale Verarbeitungseinheit;
eine Datenbank, die Daten für eine Mehrzahl der Symbole in einem einzelnen Daten-Array speichert, das ein Bild darstellt, das die Mehrzahl von Symbolen enthält;
wobei die zentrale Verarbeitungseinheit dazu konfiguriert ist:
Symbole zur Anzeige auf dem Anzeigemittel während einer Fahrt von einer aktuellen Position des Fahrzeugs zu einem Zielort zu bestimmen;
auf Grundlage der bestimmten Symbole das einzelne Daten-Array, das alle anzuzeigenden Symbole enthält, in einen Grafikspeicher zu laden; und
das Anzeigemittel zu veranlassen, eine digitale Karte und wenigstens ein Symbol der Mehrzahl von Symbolen in dem einzelnen Daten-Array auf der digitalen Karte anzuzeigen.

## Revendications

1. Procédé de gestion d'icônes dans une base de données de navigation d'un système de navigation comprenant les étapes suivantes :
réception d'une entrée d'une destination provenant d'un utilisateur ;
calcul d'un itinéraire d'une position courante à la destination ;
détermination d'une pluralité d'icônes à afficher sur un dispositif d'affichage durant un trajet jusqu'à la destination ;
chargement d'une table de données unique représentant une image contenant la pluralité des icônes à afficher dans une mémoire graphique du système de navigation ; et
récupération d'au moins une icône parmi la pluralité des icônes à afficher dans la mémoire graphique à des fins d'affichage sur le dispositif d'affichage.

2. Procédé selon la revendication 1, comprenant en outre le stockage de données pour la pluralité des icônes dans la table de données unique.

3. Procédé selon l'une quelconque des revendications précédentes, la table de données unique étant une table comprenant des informations sur la largeur, la hauteur et les coordonnées de la pluralité des icônes contenues dans l'image.

4. Procédé selon l'une quelconque des revendications précédentes, comprenant en outre le stockage d'une autre pluralité d'icônes dans une autre table de données unique.

5. Procédé selon l'une quelconque des revendications précédentes, comprenant en outre le stockage d'un arrière-plan d'un poteau indicateur séparément de la pluralité des icônes.

6. Procédé selon la revendication 5, comprenant en outre le stockage d'une référence entre ladite au moins une icône parmi la pluralité des icônes et l'arrière-plan.

7. Procédé d'affichage d'icônes dans une carte numérique comprenant le procédé selon la revendication 5 ou 6 et comprenant les étapes suivantes :
récupération de l'arrière-plan stocké du poteau indicateur ;
affichage de l'arrière-plan récupéré dans les cartes numériques ; et
affichage de l'icône récupérée sur l'arrière-plan du poteau indicateur.

8. Procédé de guidage d'itinéraire mis en oeuvre par un système de navigation, en particulier un système de navigation pour véhicule, avec un dispositif d'affichage comprenant les étapes du procédé selon la revendication 7 et fournissant des informations de guidage à un utilisateur du système de navigation.

9. Produit de programme informatique, comprenant un ou plusieurs supports lisibles par ordinateur ayant des instructions exécutables par ordinateur pour réaliser les étapes du procédé selon l'une quelconque des revendications précédentes.

10. Procédé selon l'une quelconque des revendications 1 à 8, la pluralité des icônes étant stockée dans la table de données unique sous forme d'une table comprenant des informations sur la largeur, la longueur et les coordonnées des icônes dans l'image et ladite au moins une icône qui est affichée sur le dispositif d'affichage étant récupérée de la table par référence aux coordonnées de ladite au moins une icône dans la table.

11. Procédé selon l'une quelconque des revendications 1 à 8, comprenant également :
la détermination d'une partie du voisinage d'un élément de carte dans la carte numérique où ne doit survenir aucun recouvrement de l'icône ; et
le positionnement de l'icône de sorte que la partie dans le voisinage de l'élément de carte dans la carte numérique, où ne doit survenir aucun recouvrement de l'icône, ne soit pas recouverte par l'icône.

12. Système de navigation, en particulier un système de navigation pour véhicule, comprenant
un moyen d'affichage ;
une unité de traitement centrale ;
une base de données stockant des données pour une pluralité des icônes dans une table de données unique représentant une image contenant la pluralité des icônes ; l'unité centrale de traitement étant configurée pour :
déterminer des icônes à afficher sur le moyen d'affichage durant un trajet d'une position courante du véhicule jusqu'à une destination ;
charger la table de données unique contenant toutes les icônes à afficher dans une mémoire sur la base des icônes déterminées ; et
amener le moyen d'affichage à afficher une carte numérique et au moins une icône de la pluralité des icônes dans la table de données unique sur la carte numérique.
